# EUROPEAN PATENT APPLICATION

(11) **EP 4 811 609 A1**
(43) Date of publication of application: **23.09.2026**
(21) Application number: 25164139.5
(22) Date of filing: 17.03.2025
(51) Int. Cl.: H02K 1/20, H02K 3/24, H02K 9/197, H02K 41/03

(54) **COIL COOLING DEVICE FOR A LINEAR MOTOR**

(71) Applicant: ETEL S.A., 2112 Môtiers (CH)
(72) Inventor: Grillon, Jean-Yves, 25300 Granges-Narboz (FR); Moreno, Loïc, 25300 Pontarlier (FR)
(74) Representative: P&TS SA (AG, Ltd.)

(57) **Abstract**

The present invention relates to a coil cooling device for a linear motor, in particular an ironless linear motor, comprising a cooling plate (20), two cover plates (30a, 30b), a manifold (50) and a coil unit (40). The cooling plate (20) is folded so that two plate parts (22a, 22b) are opposite to each other, each plate part (22a, 22b) comprising grooves (24a, 24b, 24c, 24d, 24e, 24f). The cover plates (30a, 30b) are fixed against the respective plate parts (22a, 22b) of the cooling plate (20) to form with the grooves (24a, 24b, 24c, 24d, 24e, 24f) one or more fluid channels of two distinct cooling circuits. Each cover plate (30a, 30b) comprises at least one inlet aperture (32a) and at least one outlet aperture (30b) in fluid communication with said one or more fluid channels of respective cooling circuit. The cover plates (30) are facing each other to form together a coil compartment (60). The manifold (50) comprises an inlet port (52a) and an outlet port (52b) in fluid communication with said at least one inlet aperture (32a) and said at least one outlet aperture (30b) of respective cover plates (30a, 30b). The coil unit (40) comprises a coil support (42) arranged to receive coils (44) of the linear motor, and to be mounted inside said coil compartment (60) such that opposite sides of the coils (44) are arranged to be cooled by respective cooling circuits. The invention also relates to a method for manufacturing the coil cooling device.

## Description

### Technical domain

The present invention concerns a coil cooling device for a linear motor, in particular an ironless linear motor. The invention also concerns a linear motor comprising such a coil cooling device and a semiconductor equipment comprising one or more of such linear motor.

### Related art

Ironless linear motors are particularly advantageous in applications requiring high-precision positioning, as the absence of an iron core in the stator eliminates unwanted cogging forces. However, achieving high force output without an iron core requires maximizing coil currents, which in turn demands an effective and well-designed cooling solution for the stator coils.

Various coil cooling systems for cooling the coils of ironless linear motors have been proposed, as disclosed for example in EP2733833B1, EP2808986B1, EP2884638B1, and EP3264575B1. The primary objectives are to efficiently dissipate heat from the coils to enhance motor performance while designing the cooling plates to be as thin and space efficient as possible to minimize any impact on the magnetic air gap.

These solutions have faced several challenges. During motor operation, delamination of the cooling plates has been observed in some cases, compromising their effectiveness. Additionally, the dual manifold system used to connect the cooling fluid to the plates is bulky and costly, adding design complexity. In particular, EP3264575B1 highlights a risk where rising motor temperatures can weaken the adhesive, potentially causing the coils to shift between the cooling plates, leading to performance issues or failure. Moreover, despite the specific design introduced in EP2884638B1, manufacturing these cooling solutions while ensuring compatibility with vacuum environments remains a significant challenge.

US 5,998,889 describes a method for arranging the coils of an ironless linear motor between two cooling plates, each traversed by a cooling fluid. To achieve this, each cooling plate is connected to a fluid inlet or outlet port positioned at its edge for coolant circulation. However, the assembly and manufacturing process remain complex, as the ports are located at opposite ends of the primary part, requiring separate inlet and outlet lines for the cooling fluid, which adds to the design complexity and production challenges.

### Short disclosure of the invention

An aim of the present invention is to provide a coil cooling device for a linear motor, in particular an ironless linear motor, that overcomes the shortcomings and limitations of the state of the art.

More specifically, an aim of the present invention is to provide a coil cooling device that requires fewer components, easy to manufacture and therefore cost-effective.

Another aim of the present invention is to provide a method for manufacturing and testing such coil cooling device.

These aims are achieved, in particular, by a coil cooling device for a linear motor, in particular an ironless linear motor, comprising a cooling plate, two cover plates, a manifold and a coil unit. The cooling plate is folded so that two plate parts, each comprising grooves, are opposite to each other. The cover plates are fixed against the respective plate parts of the cooling plate to form with the grooves one or more fluid channels of two distinct cooling circuits. Each cover plate comprises at least one inlet aperture and at least one outlet aperture in fluid communication with said one or more fluid channels of respective cooling circuits. The cover plates are facing each other to form together a coil compartment. The manifold comprises an inlet port and an outlet port in fluid communication with said at least one inlet aperture, respectively said at least one outlet aperture of respective cover plates. The coil unit comprises a coil support arranged to receive coils of the linear motor. The coil support is adapted to be mounted inside the coil compartment such that opposite sides of the coils, mounted in the coil support, are arranged to be cooled by respective cooling circuits.

In an embodiment, the cooling plate has a thickness of less than 1mm, preferably less than 0.8mm, even more preferably less than 0.7mm, for example a thickness of 0.6mm.

In an embodiment, each cover plate has a thickness of less than 0.5mm, preferably less than 0.3mm, for example a thickness of 0.2mm.

In an embodiment, each groove of respective plate parts of the cooling plate has a depth within a range from 0.3 to 0.5mm, preferably around 0.4mm.

In an embodiment, each groove of respective plate parts of the cooling plate has width within a range from 2 to 4mm, preferably around 3mm.

In an embodiment, each cover plate comprises one or more inlet aperture in fluid communication, on the one hand, with the inlet port of the manifold and, on the other hand, with said one or more fluid channels of respective cooling circuits. Similarly, each cover plate comprises one or more outlet apertures in fluid communication, on the one hand, with the outlet port of the manifold and, on the other hand, with said one or more fluid channels of respective cooling circuits.

In an embodiment, each cooling circuit comprises N independent fluid channels. N is a number selected preferably from 2 to 10, preferably from 4 to 8.

In an embodiment, each cover plate comprises N inlet apertures and N outlet apertures in fluid communication with respective N fluid channels or respective cooling circuits.

In an embodiment, the inlet and outlet apertures of each cover plate are aligned along respectively a first and a second row parallel from each other. The manifold comprises an inlet slit and an outlet slit in fluid communication with respective inlet and outlet ports of the manifold. These inlet and outlet slits extend above respective first and second rows to be in fluid communication with the inlet and outlet apertures respectively of each cover plate.

Another aspect of the invention relates to a linear motor, in particular an ironless linear motor, comprising the coil cooling device according to any of the above embodiments.

Another aspect of the invention relates to a semiconductor equipment comprising one or more of such linear motor.

Another aspect of the invention relates to a method for manufacturing and testing the coil cooling device as described above. The method comprises the step of : i) creating two foldable lines and grooves on the cooling plate on both sides of the foldable lines; ii) fixing the cover plate on respective parts of the cooling plate to form with the grooves said one or more fluid channels of the two distinct cooling circuits; iii) fixing one side of the manifold to one cover plate so that said at least one inlet aperture and said at least one outlet aperture of said one cover plate are in fluid communication with respectively the inlet and outlet ports of said manifold; iv) folding the cooling plate along the two foldable lines so that respective cover plates are facing each other; v) fixing an opposite side of the manifold to the other cover plate so that said at least one inlet aperture and said at least one outlet aperture of said other cover plate are in fluid communication with respectively the inlet and outlet ports of said manifold to create respective cooling circuits, and vi) testing the cooling device by injecting fluid into the inlet port of the manifold for detecting any leakage.

In an embodiment, the two foldable lines and grooves of the cooling plate are created by photochemical etching.

In an embodiment, the cover plates are fixed to said respective parts of the cooling plate by diffusion bonding.

In an embodiment, the cover plates are fixed to said respective parts of the cooling plate by brazing.

In an embodiment, the cooling plate, the cover plates and the manifold are made from the same material, preferably in stainless steel or in titanium.

Another aspect of the invention relates to another method for manufacturing the coil cooling device as described above. The method comprises the following steps: i) creating two foldable lines and grooves on the cooling plate on both sides of said foldable lines; ii) folding the cooling plate and mounting and aligning, on the one hand, the cover plates against respective plate parts of the cooling plate and, on the other hand, the core component of the manifold against respective cover plates by using a tooling spacer mounted between said cover plates so that said at least one inlet aperture and said at least one outlet aperture of each cover plate are in fluid communication with respectively the inlet and outlet ports of said manifold to create respective cooling circuits, and iii) using diffusion bonding to fix all parts together except the tooling spacer which is removed after bonding.

### Short description of the drawings

Exemplar embodiments of the invention are disclosed in the description and illustrated by the drawings in which:
- Figure 1 shows a perspective view of the coil cooling device according to an embodiment;
- Figure 2 shows an exploded view of the main components of the coil cooling device of Figure 1,
- Figure 3 shows a perspective view of the cooling plate in an unfolded configuration;
- Figure 4 shows a perspective views of the cover plates aligned with the respective parts of the cooling plate before being fixed to it,
- Figure 5 shows a perspective view of the manifold of the cooling device, with its respective inlet and outlet slits aligned with the inlet and outlet apertures of the corresponding cover plates, and
- Figure 6 shows a partial exploded view of the coil cooling device according to another embodiment.

### Examples of embodiments of the present invention

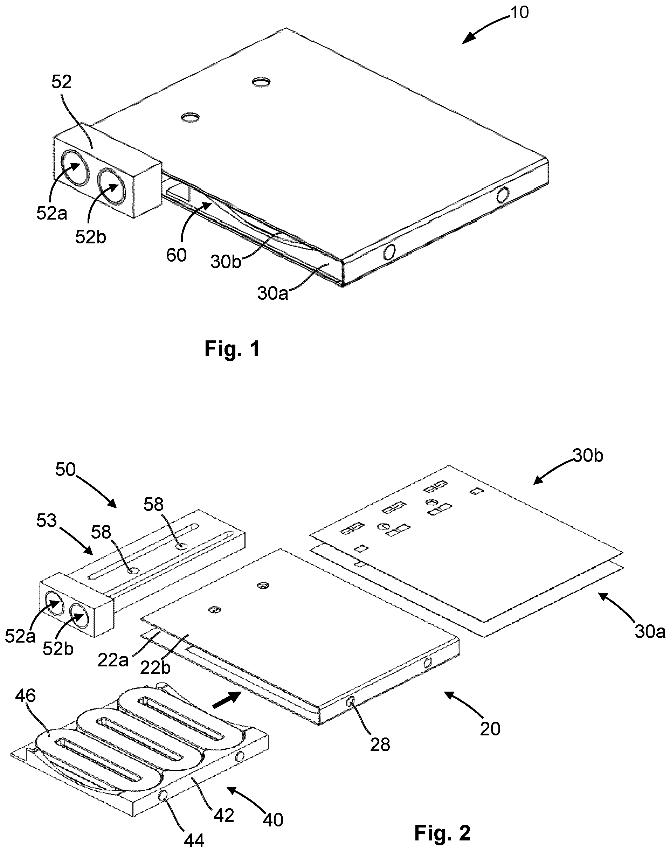

According to an embodiment and with reference to Figures 1 and 2, the coil cooling device 10 consists of various components designed to enhance the performance of a linear motor, particularly an ironless linear motor, while minimizing the cooling device's footprint to reduce any impact on the magnetic air gap. The cooling device 10 comprises a cooling plate 20 folded, preferably in half, so that two plate parts 22a, 22b are opposite to each other, cover plates 30a, 30b designed to be fixed against respective plate parts 22a, 22b, a coil assembly 40 adapted to be mounted into a coil compartment 60 between the two cover plates 30a, 30b fixed to respective plate parts 22a, 22b as well as a manifold 50 comprising an inlet and outlet ports 52a, 52b for connection to a fluid delivery system.

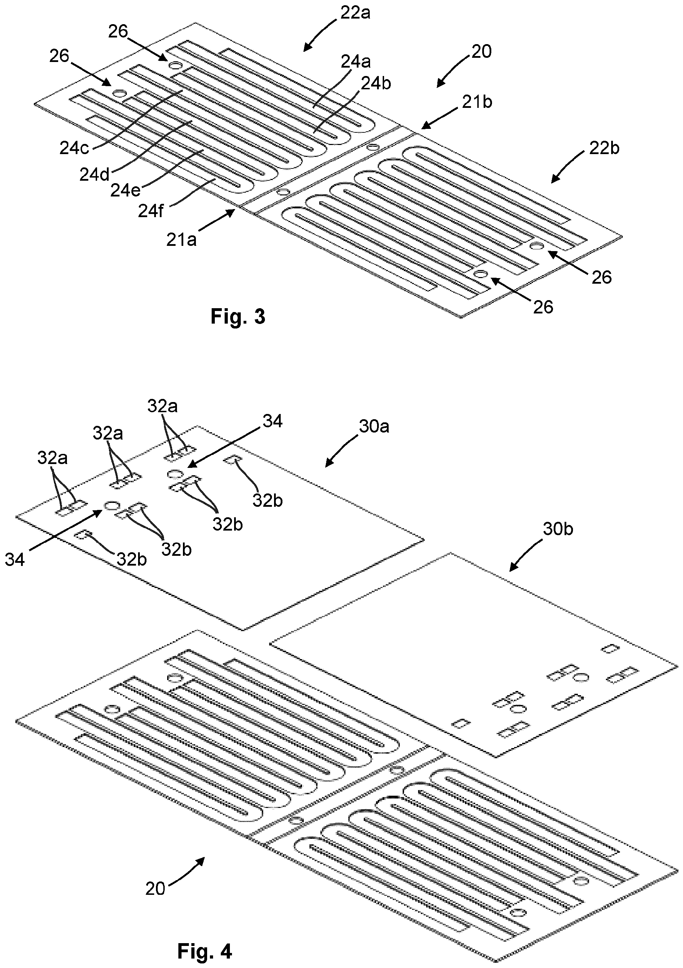

Referring to Figures 3 and 4, the cooling plate 20 has essentially a rectangular shape and comprises a top surface and a bottom surface. Two sets of grooves 24a, 24b, 24c, 24d, 24e, 24f are disposed on the bottom surface and on respective plate parts 22a, 22b of the cooling plate 20. These plate parts 22a, 22b are separated from one another by two foldable lines 21a, 21b. The cooling plate 20 may be for example a stainless steel or a titanium plate with a thickness of less than 1mm, preferably less than 0.8mm, even more preferably less than 0.7mm. The cooling plate 20 may have for example a thickness of 0.6mm. Each groove 24a, 24b, 24c, 24d, 24e, 24f of respective plate parts 22a, 22b of the cooling plate 20 has a depth within a range from 0.3 to 0.5mm, preferably around 0.4mm.

The foldable lines 21a, 21b are in the form of straight grooves whose depth is about half the thickness of the cooling plate 20, i.e. a depth of around 0.3mm to allow the cooling plate 20 to be folded, preferably in half, so that two plate parts 22a, 22b are opposite to each other according to the manufacturing method of the coil cooling device 10 which will be described subsequently.

The two set of grooves 24a, 24b, 24c, 24d, 24e, 24f as well as the foldable lines 21a, 21b are achieved through a photochemical etching process (also called photochemical machining, or PCM). Such process involves coating the metal with a light-sensitive photoresist, exposing it to UV light through a patterned mask, developing the resist to reveal the design, etching the exposed areas with a chemical etchant, and finally stripping away the remaining photoresist. This process is commonly used in the microelectronics industry among other industries and will therefore not be described further therein.

As particularly illustrated in Figure 3, each part 22a, 22b of the cooling plate 20 comprises six grooves designed to form six fluid channels independent from each other when the two cover plates 30a, 30b are fixed to respective parts of the cooling plate 20. Each groove consists of two parallel straight sections and a curved section at one end, connecting the two straight sections. One straight section extends further than the other at the opposite end. Adjacent grooves are symmetrically arranged so that the longer straight sections are positioned next to each other, and the shorter straight sections are also positioned next to each other.

With reference to Figure 4, each cover plate 30a, 30b comprises six inlet apertures 32a and six outlet apertures 32b. The inlet apertures 32a are disposed to be positioned, after fixation of the cover plates 30a, 30b against the corresponding parts 22a, 22b of the cooling plate, at respective end of the longer straight section of respective grooves 24a, 24b, 24c, 24d, 24e, 24f while the outlet apertures 32b are disposed at respective end of the shorter straight section of these grooves.

Each cover plate 30a, 30b for example a rectangular shape with the longer side slightly shorter than half the length of the longer side of the rectangular cooling plate, and the shorter side approximately the same as the shorter side of the cooling plate. These cover plates are made from materials such as stainless steel or titanium. They are manufactured using conventional machining techniques, with a thickness of less than 0.5 mm, preferably less than 0.3 mm, for example around 0.2 mm.

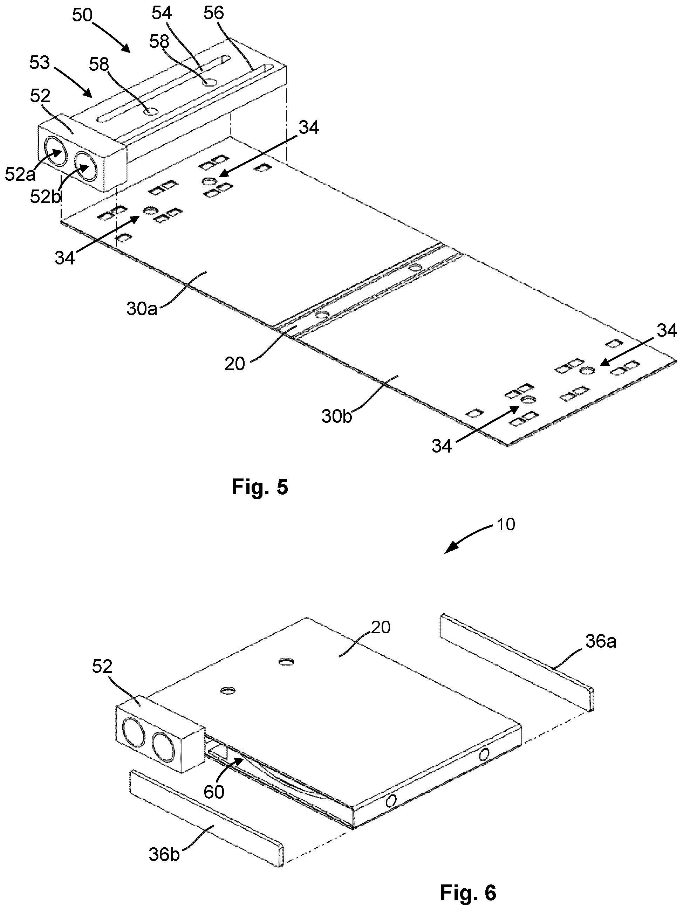

As shown in Figure 5, the manifold 50 comprises an adapter 52 and a core component 53 integral with the adapter. The adapter 52 comprises the inlet and outlet ports 52a, 52b which are threaded to receive threaded hose barbs of the fluid dispensing system. The core components 53 has, for example, a rectangular parallelepiped shape and comprises an inlet slit 54 in fluid communication with the inlet port 52a and an outlet slit 56 in fluid communication with the outlet port 52b as shown in Figure 5. These inlet and outlet slits 54, 56 are parallel to one another and pass through the core component from an upper side to a lower side.

As described in detail subsequently, these opposite sides are designed to be welded against respective cover plates 30a, 30b such that the inlet and outlet slits 54, 56 are in fluid communication with the inlet apertures 32a, respectively the outlet apertures 32b of respective cover plates 30a, 30b to form two independent cooling circuits.

Once the grooves 24a, 24b, 24c, 24d, 24e, 24f and the foldable lines 21a, 21b of the cooling plate 20 have been created by the photochemical etching process mentioned above, the cover plate 30a, 30b are aligned with respective parts of the cooling plate before fixing them together. To ensure correct alignment, each cover plate comprises two alignment holes 34 and respective parts of the cooling plate comprises also two alignment holes 26. The cover plates 30a, 30b can thus be positioned precisely against the corresponding parts of the cooling plate by aligning the holes 26, 34 and maintaining them in their position by fitting pins in the superposed holes.

The cover plates 30a, 30b may be fixed to the respective parts of the cooling plate by different techniques. In a preferred embodiment, the cover plates 30a, 30b are brazed onto respective parts 22a, 22b of the cooling plate 20. More particularly, prior to the brazing process, the surface of the cover plates and of the corresponding parts of the cooling plate are cleaned to remove oxide and/or contamination that could affect brazing using for example solvents or acid baths.

A thin sheet of filler metal, typically made of an alloy, for example a Nickel-based alloy, is fitted between each cover plate 30a, 30b and respective parts 22a, 22b of the cooling plate. The thickness of these sheets of filler metal is typically between 20 and 40 microns, for example around 30 microns. The assembly is then heated using for example a furnace. The temperature is raised above the filler metal's melting point but below the melting point of metal of both the cover plates and the cooling plate. As the filler metal melts, it flows and spreads between the plates through capillary action thereby forming the fluid channels.

In another embodiment, the cover plates 30a, 30b and the cooling plate are fixed together by diffusion bonding. In this respect, the surface of the cover plates and of the corresponding parts of the cooling plate are cleaned as mentioned above prior to the diffusion bonding process and the assembly, made of the cooling plates and covers plates, is then heated to a temperature below their melting point, typically between 60-80% of the melting temperature, in a controlled environment, such as a vacuum or inert atmosphere.

A moderate pressure is applied to the materials to bring them into close contact, ensuring that the atoms at the interface can diffuse into each other. Over time, the atoms from both materials diffuse across the interface, gradually forming a solid bond without any melting.

The cooling plate of the assembly is then folded along the two foldable lines 21a and 21b, such that the respective cover plates face each other, as shown in Figure 1. This configuration places the core component (Figure 2) of the manifold between the distal ends of each cover plate, ensuring that the inlet and outlet slits align with the corresponding inlet and outlet apertures of the cover plates. To guarantee proper alignment, the core component 53 also includes two alignment holes 58, which are positioned and secured by two pins inserted into the superposed alignment holes 26, 34 and 58. The opposite sides of core component 53 are then welded to the cover plates 30a, 30b.

A variation of the previous assembly procedure, particularly applicable when using diffusion bonding, is to assemble all parts including the folded cooling plate 20, the cover plates 30a, 30b and the core component 53 of the manifold, to insert a tooling spacer in the coil compartment 60 with appropriate thickness, and to heat the assembly so that diffusion bonding occurs between all parts except the tooling spacer which is removed after bonding.

The sealing of the cooling circuit is then tested by connecting the manifold to a fluid dispensing system and circulating fluid from the inlet port to the outlet port. If a leak is detected, the process is repeated from the beginning, by adjusting the parameters of the brazing or diffusion bonding process as necessary. These adjustments are made to ensure the cooling circuit is fully fluid-tight.

Using several shorter independent cooling channels in each cooling circuit significantly improves cooling efficiency by minimizing the temperature rise of the cooling fluid, thereby maintaining a higher temperature gradient for better heat transfer. Additionally, it ensures more uniform cooling, preventing hot spots and reducing thermal stress, which enhances the coil cooling device reliability and longevity.

The number of independent fluid channels of respective cooling circuit of the coil cooling device may vary according to the size of the linear motor.

Once a completely sealed coil cooling circuit 10 is obtained according to the aforementioned process, the coils 44 of the stator are mounted on the coil support 42 and the electrical connection between the coils are made. This support 42 in then slid into the coil compartment 60 as depicted in Figure 2 and one side of the support is brought against the coil compartment bottom to fit two engagement members 44, such as pins, into two receiving portions 28, such as holes, located on the edge of the cover plate 20. The coil cooling device 10 is mounted on the motor stator and the motor is then impregnated to fill all the voids with potting material.

To make the cooling solution compatible with vacuum applications, no impregnation material can be left visible to prevent any outgassing. Therefore, as shown in Figure 6, two additional lateral plates 36a, 36b made with the same material as the cooling plate 20 can be added to close the coil compartment 60. These lateral plates can be laser welded onto the assembly after impregnation. Another embodiment would be to include these two additional plates as extensions on the cooling plate 22b and foresee additional grooves so that they can be folded 90° to close the motor. In this case, laser welding is only required on two sides of each additional plate.

Various modifications and variations to the described embodiments of the invention will be apparent to those skilled in the art without departing from the scope of the invention as defined in the appended claims.

For example, the cooling circuit may feature a single serpentine-shaped cooling channel. However, this configuration would result in reduced cooling efficiency. In this setup, each cover plate would have only one inlet aperture located at one end of the single fluid channel and one outlet aperture located at the other end of the fluid channel. The manifold would be adapted to have one inlet channel and one outlet channel extending inside the manifold core component to bring respectively the inlet and outlet apertures of each cover plate in fluid communication with respective inlet and outlet port of the manifold.

### List of reference signs

Coil cooling device 10
Cooling plate 20
   Foldable lines 21a, 21b
   Plate parts 22a, 22b
   Grooves 24a, 24b, 24c, 24d, 24e, 24f
   Alignment holes 26
   Receiving portions 28 (e.g. holes)
Cover plate 30
   Inlet apertures 32a
   Outlet apertures 32b
   Alignment holes 34
Lateral side plate 36a, 36b
Coil assembly 40
   Coil support 42
   Engagement member 44 (e.g. pins)
   Coils 46
Manifold 50
   Adapter 52
      Inlet port 52a
      Outlet port 52b
   Core component 53
      Inlet slit 54
      Outlet slit 56
      Alignment holes 58
Coil compartment 60

## Claims

1. Coil cooling device (10) for a linear motor, in particular an ironless linear motor, comprising
- a cooling plate (20) folded so that two plate parts (22a, 22b) are opposite to each other, each plate part (22a, 22b) comprising grooves (24a, 24b, 24c, 24d, 24e, 24f),
- cover plates (30a, 30b) fixed against the respective plate parts (22a, 22b) of the cooling plate (20) to form with the grooves (24a, 24b, 24c, 24d, 24e, 24f) one or more fluid channels of two distinct cooling circuits, each cover plate (30a, 30b) comprising at least one inlet aperture (32a) and at least one outlet aperture (30b) in fluid communication with said one or more fluid channels of respective cooling circuits, wherein said cover plates (30) are facing each other to form together a coil compartment (60),
- a manifold (50) comprising an inlet port (52a) and an outlet port (52b) in fluid communication respectively with said at least one inlet aperture (32a) and said at least one outlet aperture (30b) of respective cover plates (30a, 30b), and
- a coil unit (40) comprising a coil support (42) arranged to receive coils (44) of the linear motor, and to be mounted inside said coil compartment (60) such that opposite sides of the coils (44) are arranged to be cooled by respective cooling circuits.

2. Coil cooling device (10) according to claim 1, wherein said cooling plate (20) has a thickness of less than 1mm, preferably less than 0.8mm, even more preferably less than 0.7mm.

3. Coil cooling device (10) according to any preceding claim, wherein each cover plate (30a, 30b) has a thickness of less than 0.5mm, preferably less than 0.3mm.

4. Coil cooling device (10) according to any preceding claim, wherein each groove (24a, 24b, 24c, 24d, 24e, 24f) of respective plate parts (22a, 22b) of the cooling plate (20) has a depth within a range from 0.3 to 0.5mm, preferably around 0.4mm.

5. Coil cooling device (10) according to any preceding claim, wherein each groove (24a, 24b, 24c, 24d, 24e, 24f) of respective plate parts (22a, 22b) of the cooling plate (20) has a width within a range from 2 to 4mm, preferably around 3mm.

6. Coil cooling device (10) according to any preceding claim, wherein each cover plate (30a, 30b) comprises one or more inlet apertures (32a) as well as one or more outlet apertures (32b) in fluid communication, on the one hand, with respectively the inlet and outlet ports (52a, 52b) of the manifold (50) and, on the other hand, with said one or more fluid channels of respective cooling circuits.

7. Coil cooling device (10) according to the preceding claim, wherein each cooling circuit comprises N independent fluid channels, N being any number from 2 to 10, preferably from 4 to 8.

8. Coil cooling device (10) according to the preceding claim, wherein each cover plate (30a, 30b) comprises N inlet apertures (32a) and N outlet apertures (32b) in fluid communication with respective N fluid channels of respective cooling circuits.

9. Coil cooling device (10) according to any of claims 6 to 8, wherein the inlet and outlet apertures (32a, 32b) of each cover plate (30a, 30b) are aligned along respectively a first and a second row parallel from each other and wherein the manifold (50) comprises an inlet slit (54) and an outlet slit (56) in fluid communication with respective inlet and outlet ports (52a, 52b) of the manifold (50), said inlet and outlet slits (54, 56) extending above respective first and second rows to be in fluid communication with the inlet and outlet apertures (32a, 32b) respectively of each cover plate (30a, 30b).

10. A linear motor, in particular an ironless linear motor, comprising the coil cooling device according to any preceding claim.

11. A semiconductor equipment comprising one or more linear motor according to claim 10.

12. Method for manufacturing and testing the cooling device (10) according to any preceding claim, comprising the steps of :
- creating two foldable lines (21a, 21b) and grooves (24a, 24b, 24c, 24d, 24e, 24f) on the cooling plate (20) on both sides of said foldable lines (21a, 21b);
- fixing the cover plates (30a, 30b) on respective parts (22a, 22b) of the cooling plate (20) to form with the grooves (24a, 24b, 24c, 24d, 24e, 24f) said one or more fluid channels of said two distinct cooling circuits;
- fixing one side of the manifold (50) to one cover plate (30a) so that said at least one inlet aperture (32a) and said at least one outlet aperture (30b) of said one cover plate (30a) are in fluid communication with respectively the inlet and outlet ports (52a, 52b) of said manifold (50);
- folding the cooling plate (20) along said two foldable lines (21a, 21b) so that respective cover plates (30a, 30b) are facing each other;
- fixing an opposite side of the manifold (50) to the other cover plate (30b) so that said at least one inlet aperture (32a) and said at least one outlet aperture (30b) of said other cover plate (30b) are in fluid communication with respectively the inlet and outlet ports (52a, 52b) of said manifold (50) to create respective cooling circuits, and
- testing the cooling device (10) by connecting the inlet and outlet ports (52a, 52b) of the manifold (50) to a fluid dispensing system and circulating fluid from said inlet and outlet ports for detecting any leakage in the cooling device.

13. Method according to claim 12, wherein said two foldable lines (21a, 21b) and grooves (24a, 24b, 24c, 24d, 24e, 24f) of the cooling plate (20) are created by photochemical etching.

14. Method according to claim 12 or 13, wherein the cover plates (30a, 30b) are fixed to said respective parts (22a, 22b) of the cooling plate (20) by diffusion bonding or by brazing.

15. Method according to any of claims 12 to 14, wherein the cooling plate (20), the cover plates (30a, 30b) and the manifold (50) are made from the same material, preferably in stainless steel or in titanium.
